# EUROPÄISCHE PATENTSCHRIFT

(11) **EP 3 717 141 B1**
(45) Veröffentlichungstag und Bekanntmachung des Hinweises auf die Patenterteilung: **26.01.2022**
(21) Anmeldenummer: 19717438.6
(22) Anmeldetag: 28.03.2019
(51) Int. Cl.: B08B 3/10, B08B 3/14

(54) **VERFAHREN UND VORRICHTUNG ZUR BEREITSTELLUNG EINES MEDIUMS MITTELS ZYKLISCHER NUKLEATION**
METHOD AND DEVICE FOR PROVIDING A MEDIUM BY MEANS OF CYCLIC NUCLEATION
PROCÉDÉ ET DISPOSITIF DE MISE À DISPOSITION D'UN MILIEU PAR NUCLÉATION CYCLIQUE

(30) Priorität: 28.03.2018 DE 102018107473
(43) Veröffentlichungstag der Anmeldung: 07.10.2020
(73) Patentinhaber: LPW Reinigungssysteme GmbH, 72585 Riederich (DE)
(72) Erfinder: HAUGER, Hans, 78166 Donaueschingen (DE); STEHLIG, Claudia, 72654 Neckartenzlingen (DE)
(74) Vertreter: Patentanwälte und Rechtsanwalt Weiß, Arat & Partner mbB
(86) Internationale Anmeldenummer: PCT/EP2019/057931
(87) Internationale Veröffentlichungsnummer: WO 2019/185837

(56) Entgegenhaltungen:
- WO-A1-99/25492
- WO-A1-2013/158802
- GB-A- 2 266 898
- US-A1- 2010 192 978

## Beschreibung

### Technisches Gebiet

Die Erfindung betrifft ein Verfahren zur Bereitstellung eines Mediums mittels zyklischer Nukleation nach dem Oberbegriff des Anspruchs 1 sowie eine Vorrichtung nach Anspruch 7 zur Durchführung des Verfahrens.

### Stand der Technik

Derartige Verfahren und Vorrichtungen sind bereits bekannt und gebräuchlich.

Funktionsrelevante Teile von Werkstücken, Bauteilen und Systemen liegen oft in Innenbereichen von Leitungen, Kanälen, Kammern, Tanks, Pumpen, Ventilen oder ähnlichen Komponenten. Bei beinahe allen Fertigungsverfahren im Herstellungsprozess eines Werkstücks, Bauteils oder Systems, können sowohl Partikel als auch filmische Verunreinigung an empfindliche Stellen transportiert werden und langfristig zur Funktionseinschränkung bis hin zur Bauteil- oder Systemschädigung führen. Vor allem in der Erstbemusterung, Evaluierung, Requalifizierung sowie als Eingangs- und Ausgangskontrolle und zur Überwachung der Herstellungsprozesse kann durch Analysen die technische Sauberkeit beurteilt werden.

Derzeit werden Innengeometrien von zu prüfenden Werkstücken, Bauteilen und Systemen mittels eines Mediums (flüssig oder gasförmig) durch direkte Beaufschlagung mit einem qualitativ definierten Medium durchspült. Die ausgetragene Verunreinigung wird anschließend als Probe aufbereitet und mit bekannten Verfahren analysiert bzw. gemessen. Das mag bei einfachen Geometrien für Partikel und filmische Verunreinigung sowie andererseits bis zu einer bestimmten Größe der Partikel und filmischen Verunreinigung noch aussagekräftige Ergebnisse liefern, aber insbesondere bei schwierigen Geometrien können diese Methoden den analysefähigen Austrag meist nicht sicherstellen. Die bisherigen Methoden erlauben weder eine gleichmäßige Benetzung der gesamten Innen- und Außenflächen noch stellen sie einen Austrag dieser Medien sicher.

Angewendet werden auch punktuelle Messungen zur Sauberkeit an Werkstücken. Diese mögen an sich gut sein, sagen jedoch nichts über die Sauberkeit des gesamten Werkstückes aus.

Auch die zerstörende Sauberkeitsmessung ist als nachteilig anzusehen, schließlich zerstört sie das Werkstück oder verändert es (zumindest oberflächlich). Das zu prüfende Werkstück kann danach nicht mehr genutzt werden.

Gerade bei Verunreinigungen unmittelbar auf der Grenzschicht (feinstpartikulär oder filmisch) müssen die laminaren Grenzschichten verfahrenstechnisch durchbrochen werden als Voraussetzung, dass diese Stoffe dem Medium zugeführt werden können. Dies kann der aktuelle Stand der Technik nicht gewährleisten.

Zu partikulärer Verunreinigung gehören neben metallischen und nichtmetallischen Partikeln auch Fasern. Diese werden in Größe und Anzahl bestimmt und kategorisiert.

Zu den filmischen Kontaminationen gehören neben Ölen und Fetten auch Rückstände von Kühlschmierstoffen und weiteren Fertigungshilfsmitteln (FHM) sowie Reste von Reinigungs- und Desinfektionsmitteln, aber auch Handschweiss und Fingerabdrücke.

Diese werden in Branchen gängigen Prüfverfahren für filmische Kontaminationen, wie zum Beispiel Wischtests, Infrarot, Mikrowellen, Testtinten, Kontaktwinkelmessungen, gravimetrische Messungen durch Extraktion oder Fluoreszenzmessungen ermittelt. Viele dieser Methoden kommen vor allem oberflächen- oder geometriebedingt meist nicht in Frage.

Technische Sauberkeitsanalyse im Allgemeinen setzt sich aus mehreren Schritten zusammen:
- Gewinnung der partikulären, bakteriellen oder filmischen Kontamination von Werkstücken meist, aber nicht ausschließlich durch Ablösen mit einer Flüssigkeit (Extraktion). Dazu gibt es verschiedene Verfahren, wie beispielsweise Spritzen, Ultraschall, Spülen und Schütteln. Abhängig von der Art des Werkstückes wird ein Verfahren gewählt oder mehrere Methoden miteinander kombiniert.
- Meist, aber nicht ausschließlich kommt eine Filtration des vollständigen zur Extraktion verwendeten Flüssigkeitsvolumens zur Anwendung.
- Messtechnische Analyse der Kontamination, die sich auf dem Analysefilter befindet, mittels Waage (gravimetrische Analyse) und/oder automatisiertem Lichtmikroskop.

Bezogen insbesondere auf die Automobilindustrie, aber auch z. B. in der Medizintechnik und anderen artverwandten Branchen, stellt die Werkstücksauberkeit ein technisches Qualitätsmerkmal dar, das kontrolliert und dokumentiert werden muss. Die sogenannte Restschmutzprüfung muss verlässliche Daten über Produkt- und Prozessqualität liefern, um die damit verbundenen Investitionsentscheidungen und Qualitätsmaßnahmen auf eine sichere Basis zu stellen. Die Restschmutzanalyse funktionsrelevanter Automobilteile erfordert spezielle Fachkenntnisse und Laborausrüstung. Es muss eine normgerechte Sauberkeitsanalyse an Werkstücken, Bauteilen und Baugruppen nach den etablierten Standards:
- VDA-Band 19.1
- DIN EN ISO 16232
bzw. Analysen aus dem Umgebungsmonitoring bzw. zur Lokalisierung von Kontaminationsquellen stattfinden.

Aufgrund der meist innenliegenden oder schwer zugänglichen Funktionsbereiche von Komponenten, Werkstücken, Bauteilen oder Systemen, müssen die relevanten Kontaminationen wie z.B. Partikel, Bakterien oder filmische Rückstände mittels Flüssigkeit von den betreffenden Bereichen abgereinigt werden. Hierfür stehen die unterschiedlichsten Verfahren und Ausstattungen zur Verfügung.
- Extraktionsequipment für die Verfahren, wie oben bereits ausgeführt, z.B.:
   - Spritzen
   - Spülen
   - Schütteln
   - Ultraschall

Nachteilig bei all den bereits zur Verfügung stehenden Verfahren und Vorrichtungen ist, dass beispielsweise kapillare Strukturen, komplexe dreidimensionale Geometrien, Sacklöcher, verdeckte Bereiche, Lumen, Hinterschneidungen, kleine und tiefen Gewinde oder dergleichen kritische Bereiche eines Werkstückes nicht durch die bisherigen Verfahren erreicht werden können. Das bedeutet, dass die durchgeführte Sauberkeitsanalyse nicht vollständig ist, da sich möglicherweise noch Kontaminationen in bzw. an dem Werkstück befinden, die durch die Sauberkeitsanalyse nicht ermittelt werden konnten. Nachfolgende Prozesse oder weitere Verarbeitungsschritte können darunter leiden.

Ein Verfahren nach dem Stand der Technik wird beispielsweise in der WO 2013/158802 A1 beschrieben. Dort kann ein dynamischer zyklischer Nukleationstransportprozess (D-CNX) zur Nassbehandlung eines Objekts verwendet werden, z.B. zum Reinigen oder Ätzen. Bei dem D-CNX-Prozess wird das Kammervolumen zyklisch vergrößert und verkleinert, wodurch der Kammerdruck effektiv reduziert bzw. erhöht wird. Während der Druckreduzierungsphase können Blasen erzeugt werden, die während der Druckanstiegsphase beendet werden oder an die Flüssigkeitsoberfläche wandern können. Durch die Erzeugung und Beendigung von Blasen kann das Objekt gereinigt oder geätzt werden, auch an schwer zugänglichen Stellen.

Die US 2010/192978 A1 offenbart eine Oberflächenbehandlung zum Keimen, Wachsen, Ablösen, Implodieren und Kollabieren von Dampfblasen für verschiedene Reinigungs- und Oberflächenbehandlungsanwendungen. Das Verfahren kann durch den Einsatz von Temperatur- und Chemikalienwechsel zusätzlich zu Vakuum/Druck durchgeführt werden, um eine pulsierende und kontinuierliche Wirkung innerhalb einer Flüssigkeit zu erzeugen.

Die WO 99/25492 A1 offenbart eine Vorrichtung zum Entfernen von Kohlenstoff aus Kochgeschirr umfassend einen Tank, der mit einer Lösung zum Entfernen von Kohlenstoff gefüllt werden kann und Kochgeschirr zum Einweichen in die Lösung aufnehmen kann.

Bei einer Waschmaschine gemäss der GB 2 266 898 A, die eine Waschstufe mit mehreren Spülstufen durchführt, können einzelne Spülstufen unter Bezugnahme auf die Menge an Waschmittel in der Wannenflüssigkeit, die z.B. von einem Leitfähigkeitssensor im Siphon (10) gemessen wird, weggelassen und/oder verkürzt werden, ohne dass ein weiterer Sensor das Leitungswasser überwachen muss.

### Aufgabe der Erfindung

Die Aufgabe der vorliegenden Erfindung ist es, die Nachteile aus dem Stand der Technik zu überwinden. Insbesondere soll ein Verfahren und eine Vorrichtung geschaffen werden, mit dem Medium indirekt und/oder direkt breitgestellt wird, mit dem eine Sauberkeitsanalyse hinreichend genau und entsprechend der branchenspezifischen Vielfalt von reinheitskritischen Anwendungen sowie eine (Wieder-)Aufbereitung des Mediums durchgeführt werden kann. Unterschiedlichste Reinheitsanforderungen für zu verwendende Werkstücke in Bezug auf unterschiedlichste Kontaminationsarten, die aus einem Herstellungsprozess und/oder aus unterschiedlichsten Verschleppungsszenarien resultieren können, sollen qualitativ und ggf. auch quantitativ ermittelt werden können. Dabei soll es unerheblich sein, um was für ein Werkstück es sich handelt bzw. welche Form dass Werkstück aufweist.

### Lösung der Aufgabe

Zur Lösung der Aufgabe führen ein Verfahren nach Anspruch 1 sowie eine Vorrichtung nach Anspruch 7. Vorteilhafte Ausgestaltungen finden sich in den Unteransprüchen.

Das erfindungsgemäße Verfahren zur Bereitstellung eines Mediums mittels zyklischer Nukleation setzt in erster Linie ein Wechseldruckverfahren, angelehnt an die physikalische definierte Dampfdruckkurve der jeweilige Flüssigkeit, ein. Bei diesem Prozess, auch unter dem Namen zyklische Nukleation (Cyclic Nucleation Process, kurz CNp) benannt, handelt es sich um ein bekanntes Verfahren, welches der waschmechanischen Flutreinigung zuzuordnen ist.

Hierbei wird ein vollständig oder nur teilweise mit Medium gefülltes Behältnis mit Unterdruck beaufschlagt. Dabei entstehen Gasblasen, die sich auf allen reaktiven Oberflächen, auch in komplexen Strukturen wie etwa Kapillaren und Bohrungen reinigend auswirken. Dies geschieht in erster Linie dadurch, dass bei plötzlicher Wegnahme des Unterdrucks diese wieder in sich zusammenfallen (implodieren) und dabei einen Druckschlag (Kavitation) mit einer spürbaren mechanischen Wirkung auf der gesamten Werkstückoberfläche - gerade in verdeckten oder kapillaren Bereichen erzeugen. Dabei wachsen und schrumpfen die durch Unterdruck entstandenen Gasblasen entsprechend der sich verändernden Druckamplituden fortlaufend und sorgen dafür, dass Partikel und Verschmutzungen auch an schlecht zugänglichen Stellen gelöst und aus dem unmittelbaren Bereich des Werkstücks transportiert werden können.

Ein Durchlauf einer zyklischen Nukleation ist derart im Rahmen der Erfindung definiert, dass das Medium unbelastet, d.h. rein und mit einem definierten Anfangs-Zustand in das Behältnis eingebracht wird. Der Durchlauf endet, wenn eine Maximalverschmutzung des Mediums nach Einlegen von n Werkstücken und Durchführung von n Prozessschritten einer zyklischen Nukleation bzw. n zyklischen Nukleationen erreicht wird. Die Maximalverschmutzung ist ein IST-Zustand, bei dem das Medium nicht mehr nennenswert zur Reinigung von Werkstücken geeignet ist.

n umfasst in diesem Zusammenhang die Zahlen 1 bis unendlich. Das bedeutet, dass beliebig viele Werkstücke eingelegt und beliebig viele zyklische Nukleationen oder einzelne Prozessschritte einer zyklischen Nukleation durchgeführt werden können.

Wichtig ist, dass in einem Durchlauf ein Medium gegeben ist, in welches nacheinander Werkstücke eingebracht werden, die wiederum jeweils einer oder mehr als einer zyklischen Nukleation unterzogen werden, bevor sie aus dem Medium herausgeholt werden. Das Medium kann solange verwendet werden, bis die oben bereits erwähnte Maximalverschmutzung erreicht ist. Dies kann beispielsweise nur einen Tag, mehrere Tage, Wochen oder Monate dauern. Erst bei Erreichen der Maximalverschmutzung wird das Medium aus dem Behältnis entnommen und neues Medium in das Behältnis eingebracht. Anschließend beginnt ein weiterer Durchlauf.

Bei der erfindungsgemäßen zyklischen Nukleation wird das Medium in dem geschlossenen Behältnis abwechselnd einem relativen Unterdruck und einem relativen Überdruck ausgesetzt. Relativer Unterdruck ist in diesem Zusammenhang als Unterdruck zum atmosphärischen Druck oder auch als relativer Unterdruck zum relativen Überdruck zu verstehen. Dabei liegt der Unterdruck immer unter dem Überdruck.

Der Anfangs-Zustand des Mediums ist der Zustand bzw. der Reinheitsgrad, den das reine Medium vor Einbringen eines Werkstückes in das Behältnis aufweist.

Der IST-Zustand des verschmutzten Mediums wird sowohl nach Einlegen des ersten Werkstücks als auch während und/oder nach der Durchführung von n zyklischen Nukleationen bzw. Prozessschritten der zyklischen Nukleation periodisch ermittelt und mit dem Anfangs-Zustand abgeglichen.

Ein Verschmutzungsgrad als IST-Zustand des Mediums wird in regelmäßigen Zeitabschnitten während und/oder nach Durchführung einer oder mehrerer Prozessschritte der zyklischen Nukleation bzw. nach Durchführung einer oder mehrerer zyklischen Nukleationen selbst getestet. Anschließend wird der IST-Zustand des Mediums mit dem Anfangs-Zustand abgeglichen. Dies erfolgt in der Regel durch Abgleich in einem Rechner mittels entsprechender Messsensorik.

Sobald ein erster Verschmutzungsgrad des Mediums nach Einlegen von n Werkstücken in das Medium und nach Durchführen von n zyklischen Nukleationen erreicht wird, wird ein Zusatzmedium zugegeben bis der IST-Zustand einen ersten Referenzwert erreicht. Das bedeutet, dass ein erster Verschmutzungsgrad bereits nach dem Einlegen von einem Werkstück und der Durchführung einer zyklischen Nukleation bzw. auch nur eines Prozessschrittes der zyklischen Nukleation erreicht werden kann oder aber nach Einlegen beliebig vieler weiterer Werkstücke und der Durchführung von mehr als einer weiteren zyklischen Nukleation bzw. Prozessschritten der zyklischen Nukleation. Hier sind die unterschiedlichsten Abfolgen denkbar und sollen von der vorliegenden Erfindung umfasst sein. Anstelle der Zugabe eines Zusatzmediums kann auch ein Ablassen von Medium und Auffüllen durch Zusatzmedium in der Menge des abgelassenen Mediums erfolgen.

Nachdem der erste Referenzwert erreicht wurde, werden weitere Werkstücke in das Behältnis bzw. das Medium eingelegt und eine oder mehrere zyklische Nukleationsschritte oder Nukleationen durchgeführt bis ein weiterer Verschmutzungsgrad erreicht wird. Erneut wird ein Zusatzmedium zugegeben bis der IST-Zustand einen weiteren Referenzwert erreicht.

Dies kann beliebig oft, nämlich n-mal wiederholt werden. Sobald jedoch der IST-Zustand eine Maximalverschmutzung erreicht, wird das Medium aus dem Behältnis auf nicht näher gezeigte Weise entnommen. Direkt im Anschluss daran oder mit zeitlicher Verzögerung kann neues, reines Medium in das Behältnis eingebracht werden. Der definierte Ausgangs-Zustand dieses neuen Mediums wird erneut vor Einlegen eines Werkstückes ermittelt. Der Wert des Ausgangs-Zustandes ist jedoch nie identisch mit dem Ausgangs-Zustand eines anderen Mediums. Die Ausgangs-Zustände sind jeder für sich rein, d.h. sauber. Nun kann das oben beschriebene Verfahren erneut erfolgen.

Das bedeutet im Einzelnen, dass der IST-Zustand des Mediums am Anfang der Durchführung einen Anfangswert aufweist. Mit der Reinigung immer weiterer verschmutzter Werkstücke steigt der Verschmutzungsgrad des Mediums. Bei Erreichen eines ersten Verschmutzungsgrades ist ein Verschmutzungsgrad erreicht, bei dem eine Reinigungswirkung verglichen mit dem Ausgangs-Zustand nur noch eingeschränkt möglich ist. Beim Erreichen des ersten Verschmutzungsgrades werden daher dem Medium ein oder mehrere Zusatzmedien zugeführt, um den IST-Zustand des Verschmutzungsgrades des Mediums wieder an den Anfangs-Zustand anzunähern. Dies erfolgt so oft, bis auch durch Zugabe des einen oder mehrerer Zusatzmedien das Medium nicht mehr zur Reinigung genutzt werden kann.

Dadurch wird der IST-Zustand einer Maximalverschmutzung erreicht. Dies ist meistens dann der Fall, wenn das Medium durch die Verschmutzungen der gereinigten Werkstücke eine so hohe Sättigung erreicht hat, dass das Beenden des ersten Durchlaufs angezeigt wird. In diesem Fall wird das Medium aus dem Behältnis entnommen. Das Einführen des Zusatzmediums erfolgt bevorzugt durch einen Zulauf. Die Entnahme des Mediums mit dem IST-Zustand der Maximalverschmutzung erfolgt durch einen Ablauf.

Der IST-Zustand wird durch einen oder mehrere Sensoren/Sensorik detektiert, wobei das Medium permanent und/oder intervallisch überprüft wird. Hierbei wird das Medium im laufenden Durchlauf im Behältnis, d.h. direkt getestet. Alternativ oder zusätzlich kann das Medium im laufenden Durchlauf auch in einem dafür vorgesehenen Entnahmebereich des Behältnisses getestet werden, d.h. indirekt. Bei dem Sensor oder der Sensorik kann es sich um einen PH-Sensor, einen Refraktometer, ein Leitwertsensor, einen Infrarotsensor oder einen Filterüberwachungssensor oder dergleichen handeln. In Frage kommt alles, was auf dem Markt bekannt und gebräuchlich ist.

Das zugegebene Zusatzmedium kann als zusätzliche Menge des Mediums im Ausgangszustand und/oder als ein anderes Medium dem Behältnis zugesetzt werden. Als anderes Medium kommt hier entweder ein anderes geeignetes Medium in Frage oder aber auch einfach nur Wasser. Es kann auch vorgesehen sein, dass in gleicher Menge Zusatzmedium zugesetzt wird, wie beispielsweise über ein Ventil verunreinigtes Medium aus dem Behälter entnommen wird.

Regelmäßig kann die zeitliche Länge des Durchlaufs auch dadurch verlängert werden, dass bei Erreichen eines n-ten Wertes des Verschmutzungsgrades des IST-Zustandes ein Filter für das Medium gereinigt oder ausgetauscht wird.

Eine Aufbereitung des Mediums ist nicht nur durch die bislang genannten Möglichkeiten (Filterreinigung und -austausch, Austausch des Mediums) zu erzielen, sondern ferner auch durch beispielsweise eine Phasentrennung, Ölabscheidung, Ein- oder Verdampfung, Destillation, Kristallisation, Membranfiltration, oder dergleichen. Auch die zentrifugale Trenntechnik sei hier erwähnt und umfasst. Es kommt zur Aufbereitung des Mediums alles in Frage, was dabei helfen kann, Verschmutzung aus dem Medium zu lösen und von dem Medium zu trennen, so dass das Medium weiterhin und möglichst lange durch die zyklische Nukleation zur Reinigung von Werkstücken geeignet ist.

Eine erfindungsgemäße Vorrichtung zur Bereitstellung und (Wieder-)Aufbereitung eines Mediums mittels zyklischer Nukleation weist ein geschlossenes Behältnis und das Medium auf, wobei das Medium über eine Druckeinrichtung abwechselnd einem Unterdruck und einem Überdruck aussetzbar ist. Dazu ist zusätzlich ein Sensor zur Ermittlung des IST-Zustandes, ein Rechner zum Abgleich mit hinterlegten Werten des Ausgangs-Zustandes sowie ein Zulauf vorhanden. Ein Ablauf kann vorgesehen werden, um verunreinigtes oder nicht mehr nutzbares Medium ganz oder teilweise aus dem Behältnis zu entnehmen oder abzulassen. Bei dem Sensor kann es sich um einen PH-Sensor, einen Refraktometer, ein Leitwertsensor oder einen Filterüberwachungssensor handeln.

Der Effekt der zyklischen Nukleation wurde bislang vor allem bei der Reinigung von Objekten eingesetzt. Er lässt sich mittels bekannter klassischer, verfahrenstechnischer Grundprinzipien erzeugen, indem eine mit Medium (z. B. eine Reinigungsflüssigkeit) gefüllte, geschlossene Kammer mit Unterdruck beaufschlagt wird. Die hierbei entstehenden Gasblasen bilden sich auf alle reaktiven Oberflächen, auch in komplexen Strukturen wie etwa Kapillaren und Bohrungen. Bei plötzlicher Wegnahme des Unterdrucks fallen diese wieder in sich zusammen (implodieren) und erzeugen einen Druckschlag (Kavitation) mit einer spürbaren mechanischen Wirkung auf der gesamten Oberfläche des Werkstücks - gerade in verdeckten oder kapillaren Bereichen. Der entscheidende waschmechanische Effekt besteht in der Bestimmung eines fest eingestellten Zyklus zwischen einem definierten unteren Schaltpunkt im Vakuum und einem oberen Schaltpunkt im Unterdruck oder gegebenenfalls auch im Überdruck, der beliebig oft wiederholt und variiert werden kann. Daher kommt der Begriff zyklische Nukleation.

Bei den physikalischen Effekten der zyklischen Nukleation handelt es sich prinzipiell um dieselben, wie sie bei den bekannten Ultraschallprozessen auftreten. Der Kavitationseffekt ist zwar tendenziell schwächer, allerdings entfaltet sich dieser auch zwischen der Verunreinigung und dem Substrat - und das auf der gesamten Werkstückoberfläche, auch im Innenraum von komplexen dreidimensionalen Strukturen, in den Ultraschall nur bedingt vordringen kann.

Dieses Verfahren kann somit allein oder auch ergänzend zu klassischen Reinigungsverfahren angewendet werden.

Durch die isostatischen Eigenschaften von Flüssigkeiten machen sich die genannten Druckveränderungen auch in den kleinsten Abmessungen komplexer Innengeometrien bemerkbar. In Folge entsteht ein Medienfluss/- austausch in allen - gerade auch kapillaren - Bereichen des Werkstücks. Die durch Unterdruck entstandenen Gasblasen wachsen und schrumpfen durch die Druckamplituden fortlaufend und sorgen dafür, dass Partikel und Verschmutzungen an schlecht zugängigen Stellen gelöst und aus dem unmittelbaren Bereich des Werkstücks transportiert werden. Dieser als asymmetrischer Volumenstrom bezeichnete Vorgang gewährleistet selbst in jenen kapillaren Strukturen einen Medienstrom und Verschmutzungsaustrag, die ein ungünstiges Querschnitt-Längenverhältnis aufweisen. So können zum Beispiel Schläuche oder kapillare Bohrungen mit einem Innendurchmesser von 1 mm oder weniger aktiv ausgereinigt werden.

Neben den Unterdruckverfahren haben sich auch Varianten entwickelt, die mit Druckschwankungen von Unter- bis hin zum Überdruck arbeiten. Diese erhöhen die waschmechanischen Effekte durch eine höhere Intensität/Kraft des kavitätischen Moments.

Voraussetzungen für die Wirksamkeit des Verfahrens stellen unter anderem das Medium selbst, die Materialbeschaffenheit und -struktur sowie Temperatur des Substrats in Relation zur Medientemperatur dar. Metalle sind durch ihre Oberflächenstruktur und ihre Fähigkeit der Temperaturaufnahme uneingeschränkt geeignet. Bei Isolatoren wie Kunststoffen kommt es auf die Eigenschaften an, ob zyklische Nukleation eingesetzt werden kann. Gut geeignet sind hier z. B. kohlenstoffhaltige Kunststoffe.

Vorliegend geht es nun darum, die Wirkung zyklischer Nukleation bei der technischen Sauberkeitsanalyse zu nutzen. Durch die Verwendung der zyklischen Nukleation bzw. deren Effekt, nämlich die Lösung jedweder Art von Kontamination auch an schlecht zugängigen Stellen von Werkstücken, soll gewährleistet werden, dass über die bislang bekannte Bestimmung der Kontamination hinaus die unterschiedlichsten Kontaminationsarten, die aus dem Herstellungsprozess und/oder aus unterschiedlichsten Verschleppungsszenarien analysiert werden können. Auf diese Weise können den unterschiedlichsten branchenspezifischen reinheitskritischen Anwendungen und den daraus resultierenden unterschiedlichsten Reinheitsanforderungen für die zu verwendenden Werkstücke Genüge geleistet werden.

Vorliegend wird also ein definiertes oder undefiniertes Medium eingesetzt, welches beispielhaft, aber nicht ausschliesslich zur Behandlung von Oberflächen (z. B Reinigung; Passivierung, Spülung, Ätzung, etc...) von Werkstücken verwendet wird. Dieses Medium benetzt die gesamte Oberfläche dieses Werkstückes, wobei, wie oben bereits beschrieben, die zyklische Nukleation angewandt wird, um das Ziel der vollständigen Benetzung aller Oberflächen zu erreichen. Hierbei ist es völlig unerheblich, welche Architektur dieses Werkstück hat. Darüber hinaus sind nicht nur speziell platzierte Werkstücke, sondern auch wahllos eingebrachtes und deshalb so genanntes Schüttgut hier mit umfasst.

Die Bereitstellung des Mediums zur Durchführung der zyklischen Nukleation kann, nun beispielhaft, aber nicht ausschliesslich für folgende Prüfungen verwendet werden:
- 1.: Prüfung der Verschmutzungsbelastung (z.B. filmisch, partikulär oder biologisch) eines Werkstücks, aussen und in der Innengeometrie
- 2.: Ermittlung von Blindwerten
- 3.: Ermittlung von Eingangskontaminationen
- 4.: Ermittlung von Eigenkontaminationen eines verfahrenstechnischen Aufbaues
- 5.: Aus- und/oder Abtrag der Kontaminationslast in ein Medium zur Bereitstellung einer oder mehrerer Extraktionsprobe(n) hieraus
- 6.: Bestimmung von Abklingkurven.

Hierbei ist es unerheblich, ob die Bereitstellung des Mediums einerseits direkt und/oder indirekt und/oder andererseits auch manuell und/oder automatisch und somit vollkommen reproduzierbar stattfindet. Ebenfalls unerheblich ist auch, ob ein einstufiges oder mehrstufiges Verfahren Anwendung findet.

Speziell mittels des CNp-Verfahrens können nun erstmals gesichert Medien, wie oben beschrieben, bereitgestellt werden. All die benannten Vorgänge sind somit erstmals unabhängig von der Zusammensetzung des Mediums, der Stoffgruppe(n) des Mediums, des Kontaminationsgrades des Mediums und auch unabhängig vom technischen Aufbau solch eines verfahrenstechnischen Gerätes und/oder Systems.

Dies gilt ebenfalls für sich verändernde Medien, wie z.B. Aufkonzentration einer Lösung, Verwässerung oder auch die Veränderung der Lösung wie z.B. durch den kontinuierlichen Anstieg des Verschmutzungsgrades darin.

Nur beispielhaft, aber nicht hierfür beschränkend können somit, ohne Einfluss jeglicher äusserlicher und/oder innenliegender Faktoren, folgende neuartige Prozeduren in einer neuen Reinheitsklasse verwirklicht werden:
- Ermittlung verschiedenster Verschmutzungen pro Zeiteinheit oder Loseinheit, die sich im Nachgang und/oder währen des Verfahrens aus dem Medium mittels Analyseverfahren ermitteln lassen;
- Konzentrationsermittlung ggf. auch mehrerer Substanzen und/oder ggf. Tensid-Prüfung einer Lösung und deren "Drift", während diese im Produktionsprozess kontaminiert und/oder verdünnt und/oder angereichert wird;
- Überprüfung und/oder Justierung von Spülwässern, die hin bis zu hochbehandeltem VE- (vollentsalzt) und/oder DI-Wasser und/oder destilliertem Wasser reicht und sichergestellt werden muss
- (Wieder-)Aufbereitung des Mediums/der Flüssigkeiten gemäss den Verunreinigungen (Filteraustausch, Austausch des Mediums, Ölabscheidung, Phasentrennung, und dergleichen mehr).

Die Vorteile der vorliegenden Erfindung sind wie folgt:
- absoluter Ausschluss jeglicher Faktoren, die Einfluss auf die Analyse-Systeme beinhalten können. Nur beispielhaft, aber nicht ausschliesslich sei genannt:
   1. Manuelles Handling, welches verständlicherweise immer Einfluss auf die Analyse-Systeme hat.
   2. Auswirkungen von Pumpen (Kavitation etc..) oder Filtrationen (Rückspülung von Kontaminationsresten etc..).
   3. Unvollständige Benetzung aller Geometrien.
- Sicherstellung von geometrischer Unabhängigkeit durch die zyklische Nukleation und somit Sicherstellung der kompletten Benetzung eines Werkstückes.

Das CNp-Verfahren wird bevorzugt in dem Behältnis durchgeführt. Als Behältnis kann ein Tank und/oder Bad und/oder eine ähnlich aufgebaute Vorrichtungsanordnung vorgesehen sein. Die Ausmasse des Behältnisses richten sich nach dem zu behandelnden Werkstück. In der Regel handelt es sich bei dem Behältnis um ein ganzes Anlagensystem, jedoch sollen auch kleine und kleinste Anlagen von der vorliegenden Erfindung umfasst sein. Wichtig ist, dass das Behältnis nicht die Verwendung bzw. Behandlung von Werkstücken aufgrund von Grösse oder Ausformung des Werkstücks ausschließt. Das Behältnis muss sich der Anforderung an das Werkstück anpassen und nicht umgekehrt.

In dem Behältnis befinden sich ein oder mehrere Werkstück(e), welche auf eine mögliche Kontamination zu untersuchen ist. Wie bereits mehrfach ausgeführt, gibt es, was die Grösse und Ausformung des Werkstückes betrifft, keine Grenzen. Ebenso gibt es hinsichtlich der Bestandteile und Zusammensetzung des Werkstückes, seiner Oberflächenbeschaffenheit und dergleichen keine Grenzen. Durch das vorliegende Verfahren bzw. die Vorrichtung soll jedwedes in Frage kommende Werkstück, ob aus der Automobilindustrie, der Medizintechnologie oder dergleichen stammend, behandelt werden können. Das Medium kann über eine Zuleitung in das Behältnis eingebracht und über eine Ableitung aus dem Behältnis entfernt werden.

Das Medium kann sowohl als Einzelstoff als auch als Mixtur, flüssig oder dampfförmig über die Zuleitung in das Behältnis eingebracht werden.

Das Behältnis ist vollständig verschlossen, sodass keine äußeren Einflüsse auf das eingebrachte Medium wirken können.

Über eine Entnahmevorrichtung kann, nach Durchführung einer ersten zyklischen Nukleation, das Medium entnommen werden und einer Analyse bzw. einem Analyse-System zugeführt werden. Dies soll durchaus von der vorliegenden Erfindung umfasst sein.

Als Entnahmevorrichtung kommen all jene baulichen Vorrichtungen in Frage, mit welchen ein Teil des Mediums aus dem Behältnis entnommen werden kann. Das Medium wird gemäss der gemessenen Verunreinigung durch Aktionen des

Systems kontinuierlich aufbereitet. Erfindungsgemäß passiert alles automatisch und kontinuierlich.

Es lassen sich unter anderem folgende Kontaminationen unterscheiden:
- Partikulär (a)biotisch, z.B.:
   - Rückstände aus dem Fertigungsprozess (Abrieb, Schleifmittel, ...)
   - Staub aus der Umgebung
   - Bakterien
   - Sporen
   - Hautschuppen
   - Zellbruchstücke
   - Endotoxine
- Filmisch (an)organisch, z.B.:
   - Rückstände von Fertigungshilfsstoffen (Kühlschmiermittel, Konservierungsstoffe etc.)
   - Fingerabdrücke
   - Rückstände aus dem Werkstück selbst.

Dank der umfangreichen analytischen Möglichkeiten im Technischen Sauberkeitslabor können über die quantitative Bestimmung hinaus Informationen wie beispielsweise elementare Zusammensetzungen, aber auch die dreidimensionalen Ausmasse bestimmt werden.

Das erfindungsgemässe Verfahren und die erfindungsgemässe Vorrichtung lassen sich in vielerlei Bereichen anwenden. Nur beispielhaft sei genannt:
- Motoren- und Getriebekomponenten (z. B. für den Maschinenbau)
- Türschließsysteme
- Werkzeugkomponenten u. a. für Bohr-, Schneid- und Fräsanwendungen mit Minimalmengenschmierung/Innenkühlung
- Tiefzieh-, Kaltumform- und Schmiedeteile
- Hydraulikkomponenten, auch nach dem Entgratprozess
- Vorbehandlung vor, während und nach Wärmebehandlungsprozessen
- Reinigung von Schüttware
- Sensor-Reinigung
- Ventile und Pneumatikbaugruppen
- Werkstücke, Bauteile und Komponenten im Umfeld der Halbleiterproduktion (Ventile, Rohre, Kühlelemente, etc.)
- Medizintechnische Komponenten nach der zerspanenden Fertigung oder nach Oberflächenbehandlungs- und Umformprozessen
- Optische Komponenten (z. B. aus der Laser- und Sensortechnik)
- Feinmechanische Komponenten mit Mikrostrukturen
- oder dergleichen.

### Figurenbeschreibung

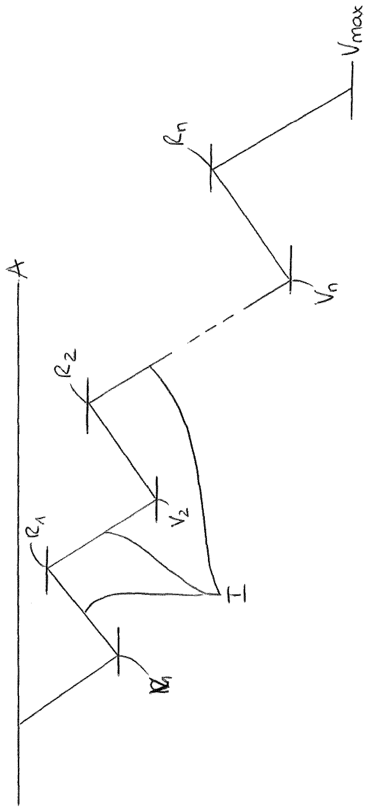

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur eine vereinfachte schematische Darstellung eines Verfahrens zur Bereitstellung eines Mediums mittels zyklischer Nukleation gemäss der vorliegenden Erfindung.

### Ausführungsbeispiel

Gemäss der einzigen Figur wird schematisch ein Verfahren zur Bereitstellung eines Mediums mittels einer zyklischer Nukleation dargestellt.

Das Medium ist zunächst in ein nicht näher gezeigtes, geschlossenes Behältnis auf nicht näher gezeigte Weise eingebracht worden und wird in diesem Behältnis zur Durchführung einer oder mehrerer zyklischer Nukleationen abwechselnd einem Unterdruck und einem relativen Überdruck ausgesetzt.

Wenn das Medium in das Behältnis eingebracht worden ist, wird ein Anfangs-Zustand (A) des sogenannten reinen Mediums ermittelt, d.h. noch bevor ein erstes verschmutztes Werkstück in das Behältnis und damit in das Medium eingelegt wurde. Nachdem das erste verschmutzte Werkstück in das Medium eingelegt wurde, wird ein IST-Zustand (I) des verschmutzten Mediums werden ermittelt.

Der IST-Zustand (I) wird sowohl nach dem Einlegen des ersten Werkstückes als auch nach der Durchführung von n zyklischen Nukleationen periodisch ermittelt und mit dem Anfangs-Zustand (A) abgeglichen. Der IST-Zustand (I) kann folglich in beliebigen gleichmässigen oder ungleichmässigen Zeitabständen während einer zyklischen Nukleation oder anschliessend ermittelt werden.

Sobald ein erster Verschmutzungsgrad (V₁) des Mediums nach Einlegen von n Werkstücken in das Medium erreicht wird, wird ein Zusatzmedium zugegeben bis der IST-Zustand (I) einen ersten Referenzwert (R₁) erreicht.

Anschliessend werden weitere Werkstücke in das Behältnis bzw. das Medium eingelegt bis ein weiterer Verschmutzungsgrad (Vₙ) erreicht wird. Erneut wird ein Zusatzmedium zugegeben bis der IST-Zustand (I) einen weiteren Referenzwert (Rₙ) erreicht.

Dies kann beliebig oft wiederholt werden. Sobald jedoch der IST-Zustand (I) eine Maximalverschmutzung (Vₘₐₓ) erreicht, wird das Medium aus dem Behältnis auf nicht näher gezeigte Weise entnommen. Direkt im Anschluss daran oder mit zeitlicher Verzögerung kann neues, reines Medium in das Behältnis eingebracht werden und das oben beschriebene Verfahren beginnt erneut.

Der IST-Zustand wird durch einen Sensor detektiert, wobei das Medium permanent und/oder intervallisch überprüft wird. Hierbei wird das Medium im laufenden Durchlauf im Behältnis getestet. Alternativ oder zusätzlich kann das Medium im laufenden Durchlauf auch in einem dafür vorgesehenen Entnahmebereich des Behältnisses getestet werden. Bei dem Sensor kann es sich um einen PH-Sensor, einen Refraktometer, ein Leitwertsensor oder einen Filterüberwachungssensor handeln.

Regelmäßig kann die zeitliche Länge der Durchführung auch dadurch verlängert werden, dass bei Erreichen eines n-ten Wertes des Verschmutzungsgrades des IST-Zustandes ein Filter für das Medium gereinigt oder ausgetauscht wird.

Eine erfindungsgemäße Vorrichtung zur Bereitstellung eines Mediums mittels zyklischer Nukleation weist ein geschlossenes Behältnis und das Medium auf, wobei das Medium über eine Druckeinrichtung abwechselnd einem Unterdruck und einem Überdruck aussetzbar ist. Dazu ist zusätzlich ein Sensor zur Ermittlung des IST-Zustandes, ein Rechner zum Abgleich mit hinterlegten Werten des Ausgangs-Zustandes sowie ein Zulauf vorhanden. Ein Ablauf kann vorgesehen werden, um verunreinigtes oder nicht mehr nutzbares Medium ganz oder teilweise aus dem Behältnis zu entnehmen oder abzulassen. Bei dem Sensor kann es sich um einen PH-Sensor, einen Refraktometer, ein Leitwertsensor oder einen Filterüberwachungssensor oder dergleichen handeln. Das Behältnis ist vollständig verschlossen, d.h. hermetisch geschlossen, sodass keine äußeren Einflüsse auf das eingebrachte Medium wirken können. Das zugegebene Zusatzmedium kann als zusätzliche Menge des Mediums im Ausgangszustand und/oder ein anderes Medium dem Behältnis zugesetzt werden. Als anderes Medium kommt hier entweder ein anderes geeignetes Medium in Frage oder aber auch einfach nur Wasser. Es kann auch vorgesehen sein, dass in gleicher Menge Zusatzmedium zugesetzt wird, wie beispielsweise über ein Ventil verunreinigtes Medium aus dem Behälter entnommen wird.

Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne vom Anwendungsbereich der beigefügten Ansprüche abzuweichen.

**Bezugszeichenliste**

| | | | |
|---|---|---|---|
| 1 | | A | Ausgangs-Zustand |
| 2 | | V | Verschmutzungsgrad |
| 3 | | R | Referenz-Zustand |
| 4 | | Vmax | Maximalverschmutzung |
| 5 | | | |
| 6 | | | |
| 7 | | | |
| 8 | | | |
| 9 | | | |
| 10 | | | |
| 11 | | | |
| 12 | | | |
| 13 | | | |
| 14 | | | |
| 15 | | | |
| 16 | | | |
| 17 | | | |
| 18 | | | |
| 19 | | | |
| 20 | | | |
| 21 | | | |
| 22 | | | |
| 23 | | | |
| 24 | | | |
| 25 | | | |
| 26 | | | |
| 27 | | | |
| 28 | | | |
| 29 | | | |
| 30 | | | |
| 31 | | | |
| 32 | | | |
| 33 | | | |

## Patentansprüche

1. Verfahren zur Bereitstellung eines Mediums mittels einer zyklischer Nukleation, wobei das Medium in ein geschlossenes Behältnis eingebracht wird, wobei bei der zyklischen Nukleation das Medium abwechselnd einem Unterdruck und einem relativen Überdruck ausgesetzt wird,
**gekennzeichnet durch** folgende Schritte:
- ein Anfangs-Zustand (A) des reinen Mediums und ein IST-Zustand (I) des verschmutzten Mediums werden ermittelt,
- der Anfangs-Zustand (A) wird vor Einlegen eines ersten Werkstücks ermittelt,
- der IST-Zustand (I) wird nach Einlegen des ersten Werkstücks und Durchführung von n zyklischen Nukleationen periodisch ermittelt und mit dem Anfangs-Zustand (A) abgeglichen,
- sobald ein erster Verschmutzungsgrad (V₁) des Mediums nach Einlegen von n Werkstücken in das Medium erreicht wird, wird ein Zusatzmedium zugegeben bis der IST-Zustand (I) einen ersten Referenzwert (R₁) erreicht,
- anschliessend werden weitere Werkstücke eingelegt bis ein weiterer Verschmutzungsgrad (Vₙ) erreicht wird,
- anschliessend wird ein Zusatzmedium zugegeben bis der IST-Zustand (I) einen weiteren Referenzwert (Rₙ) erreicht,
- sobald der IST-Zustand (I) eine Maximalverschmutzung (Vₘₐₓ) erreicht, wird das Medium aus dem Behältnis entnommen.

2. Verfahren nach Anspruch 1, **dadurch gekennzeichnet, dass** der Ist-Zustand (I) des Mediums im laufenden Durchlauf in dem Behältnis ermittelt wird.

3. Verfahren nach Anspruch 1 oder 2, **dadurch gekennzeichnet**, der Ist-Zustand (I) des Mediums im laufenden Durchlauf in einem Entnahmebereich des Behältnisses ermittelt wird.

4. Verfahren nach einem der vorigen Ansprüche, **dadurch gekennzeichnet, dass** der IST-Zustand und der Anfangs-Zustand (A) durch einen Sensor/eine Sensorik detektiert wird, wobei das Medium permanent und/oder intervallisch überprüft wird.

5. Verfahren nach einem der vorigen Ansprüche, **dadurch gekennzeichnet, dass** das Zusatzmedium als zusätzliche Menge des Mediums in einem Anfangs-Zustand und/oder als ein anderes Medium dem Behältnis zugesetzt wird.

6. Verfahren nach einem der vorigen Ansprüche, **dadurch gekennzeichnet, dass** bei Erreichen eines n-ten Wertes des Verschmutzungsgrades (Vₙ) des IST-Zustandes (I) ein Filter für das Medium gereinigt oder ausgetauscht wird.

7. Vorrichtung zur Durchführung des Verfahrens nach den Ansprüchen 1 bis 6 zur Bereitstellung eines Mediums mittels zyklischer Nukleation, mit einem geschlossenen Reinigungsbehältnis, in welchem ein Medium vorhanden ist, wobei das Medium über eine Druckeinrichtung abwechselnd mit einem Unterdruck und einem Überdruck beaufschlagbar ist, mit einem Sensor/ einer Sensorik, welcher geeignet ist, einen Anfangs-Zustand (A) des reinen Mediums und einen IST-Zustand des verschmutzten Mediums zu detektieren, einen Rechner zum Abgleich mit hinterlegten Werten des Ausgangs-Zustandes sowie einen Zulauf für ein Zusatzmedium.

8. Vorrichtung nach Anspruch 7, **dadurch gekennzeichnet, dass** es sich um einen PH-Sensor, einen Refraktometer, ein Leitwertsensor, einen Infrarotsensor oder einen Filterüberwachungssensor oder dergleichen handeln.

## Claims

1. Method for providing a medium by means of a cyclic nucleation, wherein the medium is introduced into a closed container, wherein in the cyclic nucleation the medium is alternately subjected to a negative pressure and a relative overpressure, **characterized by** the following steps:
- an initial state (A) of the pure medium and an ACTUAL-state (I) of the contaminated medium are determined,
- the initial state (A) is determined before inserting a first workpiece,
- the ACTUAL-state (I) is determined periodically after inserting the first workpiece and executing n cyclic nucleations, and is compared with the initial state (A),
- as soon as a first degree of contamination (Vi) of the medium is reached after inserting n workpieces into the medium, an additional medium is added until the ACTUAL-state (I) reaches a first reference value (Ri),
- then further workpieces are inserted until a further degree of contamination (Vₙ) is reached,
- then an additional medium is added until the ACTUAL-state (I) reaches a further reference value (Rₙ),
- as soon as the ACTUAL-state (I) reaches a maximum contamination level (Vₘₐₓ), the medium is removed from the container.

2. Method according to claim 1, **characterized in that** the ACTUAL-state (I) of the medium is determined in the container in the current cycle.

3. Method according to claim 1 or 2, **characterized in that** the actual-state (I) of the medium is determined in a removal area of the container in the current cycle.

4. Method according to one of the preceding claims, **characterized in that** the ACTUAL-state and the initial state (A) are detected by a sensor/sensor system, wherein the medium is checked permanently and/or intermittently.

5. Method according to any one of the preceding claims, **characterized in that** the additional medium is added to the container as an additional amount of the medium in an initial state and/or as a different medium.

6. Method according to one of the preceding claims, **characterized in that** when an n^{th} value of the degree of contamination (Vₙ) of the ACTUAL-state (I) is reached, a filter for the medium is cleaned or replaced.

7. Device for performing the method according to claims 1 to 6 for providing a medium by means of cyclic nucleation, having a closed cleaning container in which a medium is present, wherein the medium can be alternately subjected to a negative pressure and an overpressure via a pressure device, having a sensor/sensor system which is suitable for detecting an initial state (A) of the clean medium and an ACTUAL-state of the contaminated medium, a computer for comparison with stored values of the initial state, and an inlet for an additional medium.

8. Device according to claim 7, **characterized in that** it is a PH-sensor, a refractometer, a conductance sensor, an infrared sensor or a filter monitoring sensor or the like.

## Revendications

1. Procédé destiné à la fourniture d'un milieu au moyen d'une nucléation cyclique, dans lequel le milieu est introduit dans un récipient fermé, dans lequel le milieu est alternativement exposé à une pression négative et à une pression positive relative pendant la nucléation cyclique,
**caractérisé par** les étapes suivantes :
- un état initial (A) du milieu pur et un état actuel (I) du milieu contaminé sont déterminés,
- l'état initial (A) est déterminé avant l'insertion d'une première pièce,
- l'état actuel (I) est déterminé de manière périodique après l'insertion de la première pièce et le fait d'effectuer n nucléations cycliques et est comparé à l'état initial (A),
- dès qu'un premier degré de contamination (Vi) du milieu est atteint après l'insertion de n pièces dans le milieu, un milieu supplémentaire est ajouté jusqu'à ce que l'état actuel (I) atteigne une première valeur de référence (R₁),
- puis d'autres pièces sont insérées jusqu'à ce qu'un autre degré de contamination (Vₙ) soit atteint,
- puis un milieu supplémentaire est ajouté jusqu'à ce que l'état actuel (I) atteigne une autre valeur de référence (Rₙ),
- dès que l'état actuel (I) atteint une contamination maximale (Vₘₐₓ), le milieu est retiré du récipient.

2. Procédé selon la revendication 1, **caractérisé en ce que** l'état actuel (I) du milieu est déterminé lors de son passage dans le récipient.

3. Procédé selon la revendication 1 ou 2, **caractérisé en ce que** l'état actuel (I) du milieu est déterminé lors de son passage dans une zone de prélèvement du récipient.

4. Procédé selon l'une des revendications précédentes, **caractérisé en ce que** l'état actuel et l'état initial (A) sont détectés par un capteur/système de capteurs, le milieu étant contrôlé en permanence et/ou par intermittence.

5. Procédé selon l'une des revendications précédentes, **caractérisé en ce que** le milieu supplémentaire est ajouté au récipient en tant que quantité supplémentaire du milieu à l'état initial et/ou en tant qu'autre milieu.

6. Procédé selon l'une des revendications précédentes, **caractérisé en ce que** lorsqu'une nième valeur du degré de contamination (Vₙ) de l'état actuel (I) est atteinte, un filtre pour le milieu est nettoyé ou remplacé.

7. Dispositif destiné à mettre en œuvre le procédé selon les revendications 1 à 6 pour fournir un milieu au moyen d'une nucléation cyclique, comportant un récipient de nettoyage fermé dans lequel se trouve un milieu, le milieu pouvant être soumis alternativement à une dépression et une surpression par l'intermédiaire d'un appareil de pression, comportant un capteur/système de capteurs qui est approprié pour détecter un état initial (A) du milieu pur et un état actuel du milieu contaminé, un calculateur destiné à la comparaison avec des valeurs mémorisées de l'état initial ainsi qu'une entrée pour un milieu supplémentaire.

8. Dispositif selon la revendication 7, **caractérisé en ce qu'**il s'agit d'un capteur PH, d'un réfractomètre, d'un capteur de conductance, d'un capteur infrarouge ou d'un capteur de surveillance de filtre ou similaire.
